# NEUE EUROPÄISCHE PATENTSCHRIFT

(11) **EP 0 212 304 B2**
(45) Veröffentlichungstag und Bekanntmachung des Hinweises auf die Entscheidung über den Einspruch: **06.12.1995**
(45) Hinweis auf die Patenterteilung: 03.04.1991
(21) Anmeldenummer: 86110106.1
(22) Anmeldetag: 23.07.1986
(51) Int. Cl.: A01B 63/111

(54) **Elektrohydraulische Einrichtung zum Regeln eines Hubwerks an einem landwirtschaftlichen Arbeitsfahrzeug**
Electro-hydraulic device for controlling the lifting device of a tractor
Dispositif électrohydraulique pour contrôler l'attelage de relevage d'un tracteur

(30) Priorität: 16.08.1985 DE 3529243; 11.02.1986 DE 3604218
(43) Veröffentlichungstag der Anmeldung: 04.03.1987
(73) Patentinhaber: ROBERT BOSCH GMBH, 70442 Stuttgart (DE)
(72) Erfinder: Arnold, Winfried, Ing., D-7143 Vaihingen/Enz (DE); Hesse, Horst, Dr. Dipl.-Ing., D-7000 Stuttgart 1 (DE); Höfer, Friedrich-Wilhelm, Dipl.-Ing., D-7257 Ditzingen 5 (DE); Lödige, Heinrich, Dipl.-Ing., D-7143 Vaihingen/Enz (DE); Mohaupt, Hubert, Ing., D-7120 Bietigheim-Bissingen (DE); Schumacher, Werner, Dipl.-Ing., D-7144 Asperg (DE)

(56) Entgegenhaltungen:
- EP-A- 0 043 725
- EP-A- 0 092 316
- EP-A- 0 128 715
- EP-A- 0 151 324
- DE-A- 2 508 620
- DE-A- 3 240 278
- GB-A- 2 120 419

## Beschreibung

### Stand der Technik

Die Erfindung geht aus von einer elektrohydraulischen Einrichtung zum Regeln eines Hubwerks an einem landwirtschaftlichen Arbeitsfahrzeug nach der Gattung des Hauptanspruchs. Es ist schon eine solche Einrichtung aus der DE-OS 25 08 620 bekannt, bei der die Regelgrößen Lage, Zugkraft und Schlupf kombiniert verarbeitet werden, um auf diese Weise bei vielseitigen Einsatzfällen des Traktors eine elastische und geschwinde Arbeitsweise der Regeleinrichtung zu erreichen. Obwohl die Verarbeitung eines schlupfabhängigen Signals in vielen Anwendungsfällen vorteilhaft ist, hat diese Einrichtung doch den Nachteil, daß hier die Hauptregelgrößen Lage und Zugkraft nicht miteinander in einer Mischregelung verarbeitbar sind. Für beide Hauptregelgrößen wird mit Hilfe von zwei Sollwertgebern jeweils getrennt voneinander die Regelabweichung ermittelt und über einen Schalter einer nichtlinearen Einheit mit Totzone eingegeben, deren Ausgangssignal erst mit dem schlupfabhängigen Signal verknüpft wird. Bei dieser Einrichtung können somit auch die Regelgrößen Lage und Schlupf miteinander kombiniert werden, was in den meisten Anwendungs fällen unerwünscht ist. Anstelle der Mischregelung erlaubt der Schalter lediglich eine Umschaltung zwischen den beiden Hauptregelgrößen Lage und Zugkraft. Außerdem ist in manchen Fällen die unmittelbare Verarbeitung der Regelgröße Schlupf unvorteilhaft. Bei der bekannten Regeleinrichtung wird ferner der Schlupfeinfluß über ein nichtlineares Glied der Regelung zugeführt und unterliegt so einer Begrenzung, so daß der Schlupfeinfluß nur in einem gewissen Bereich wirkt. Auch ist sein Einfluß auf den Regelkreis konstant, wenn der zugehörige Schalter geschlossen ist.

Ferner ist aus J. agric. Engng. Res. (1981) 26, p. 293-306, S.M.Md. Ismail, G. Singh, D. Gee-Clough "A Preliminary Investigation of a Combined Slip and Draught Control for Tractors" bereits eine elektrohydraulische Regeleinrichtung bei einem Traktor mit angelenktem Pflug bekannt, bei der das Zugkraftregelsystem durch eine Schlupfrückführung ergänzt wird. Bei dieser Einrichtung wird aus einem Sollwert und einem Istwert des Schlupfes ein Differenzsignal als Schlupf-Regelabweichung gebildet. Diese Schlupf-Regelabweichung wird dem Sollwert der Zugkraft so zugeführt, daß das resultierende Sollwertsignal der Zugkraft größer wird, wenn diese Schlupf-Regelabweichung positiv ist, und kleiner wird, wenn sie negativ ist. Erst das resultierende Sollwertsignal der Zugkraft wird mit dem Istwertsignal der Zugkraft verglichen und daraus eine resultierende Regelabweichung gewonnen, welche zur Steuerung von Heben oder Senken des Pfluges benutzt wird. Bei dieser Art der Zusammenführung der Signale für Schlupf-Regelabweichung und Sollwert der Zugkraft ergibt sich ein resultierender Sollwert der Zugkraft, der größer oder kleiner sein kann als der Sollwert der Kraft. Die nach dem Vergleich mit dem Istwert der Zugkraft sich ergebende resultierende Regelabweichung überschreitet daher den für sie vorgesehenen Bereich oder sie füllt ihn nicht aus. Dies kann zu einer ungünstigen Arbeitsweise der Regeleinrichtung führen. Ferner kann bei dieser Verknüpfung der Regelgrößen Schlupf und Zugkraft ein hoher Anteil an Schlupfregelung nicht realisiert werden, da der Sollwert der Zugkraft stets in voller Stärke anliegt, um mit der Schlupf-Re gelabweichung addiert zu werden. In einer Reihe von Fällen kann aber ein höherer Anteil an Schlupfregelung vorteilhaft sein. Von Nachteil kann ferner sein, daß auch bei Lagezumischung der Schlupfeinfluß stets in voller Größe über den Sollwert wirkt. Bei dieser Einrichtung ist somit eine echte Mischregelung kaum möglich. Die Verwendung von zwei Sollwertgebern erhöht nicht nur den Aufwand, sondern verringert auch den Bedienungskomfort.

Ferner ist aus der EP 0 092 316 A1 eine elektrohydraulische Einrichtung zur Hubwerksregelung bekannt, bei der Kraft-, Lage-, Schlupf- und Motordrehzahl-Signale miteinander verarbeitet werden. Dabei wird neben einer Schlupf-Regelabweichung (SERR) eine Motordrehzahl-Fehlerabweichung (RERR) ermittelt und deren Summensignal mit einem Lastsollwert (LCOM) verglichen, um einen Zwischensollwert (COMM) zu erhalten, der erst mit einem korrigierten Zugkraft-Istwertsignal verarbeitet wird. Hier wird das schlupfabhängige Signal auf die Sollwertseite zurückgeführt, bevor es zu einer Bildung der Regelabweichung (LERR) für die Regelstrecke kommt. Zudem ist hier keine vergleichbare Mischung auf der Istwertseite vorgesehen, zumal das Lagesollwertsignal (PCOM) in einem getrennten Pfad verarbeitet wird und auf die Regelstrecke einwirkt.

Es ist schon eine solche Einrichtung zum Regeln eines Hubwerks aus der DE-A 3 240 278 bekannt, bei der das Istwertsignal eines Lagesensors und das Istwertsignal eines Kraftsensors einer Mischvorrichtung zugeführt werden, bei der mit Hilfe eines Stellers die Mischung der beiden Eingangssignale in beliebigem Verhältnis möglich ist. Das Ausgangssignal der Mischvorrichtung wird an einem Summenpunkt mit einem Sollwertsignal verglichen und damit die Regelabweichung des Regelkreises zur Ansteuerung des Hubwerks gebildet. Diese Einrichtung arbeitet lediglich mit zwei Regelgrößen, wobei sich kein Hinweis auf eine Regelgröße "Schlupf" findet.

### Vorteile der Erfindung

Die erfindungsgemäße elektrohydraulische Einrichtung zum Regeln eines Hubwerks an einem landwirtschaftlichen Arbeitsfahrzeug mit den kennzeichnenden Merkmalen des Hauptanspruchs hat demgegenüber den Vorteil, daß sie bei relativ geringem Aufwand und hohem Bedienungskomfort eine optimale Positionssteuerung des Hubwerks erlaubt. Bei dieser Verarbeitung des schlupfabhängigen Signals wird in vorteilhafter Weise erreicht, daß trotz minimaler Anzahl von Stellgliedern bzw. Sollwertgebern in Lageregelung der Schlupfeinfluß ausgeblendet werden kann und deshalb unwirksam ist. Wenn ferner bei ungünstigen Betriebsbedingungen Schwingungen im Regelkreis durch die Schlupfauswertung auftreten, so können diese Schwingungen durch Lagebeimischung reduziert werden, weil bei der Lagezumischung gleichzeitig auch der Schlupfeinfluß abgeschwächt wird.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist eine Ausbildung gemäß Anspruch 2, wenn als schlupfabhängiges Signal die Differenzgeschwindigkeit ermittelt und in der Regeleinrichtung verarbeitet wird. Dies hat bei kleinen Geschwindigkeiten des Traktors zur Folge, daß die Regelgröße Differenzgeschwindigkeit im Verhältnis zur sonstigen Regelgröße Schlupf überbewertet wird. Dies führt vor allem bei ungünstigen Betriebsbedingungen zu einer vorteilhaften Arbeitsweise, indem z.B. beim Arbeiten des Traktors am Feldanfang ein zügigeres Einziehen des Pfluges erreicht wird, während beim Herausfahren des Traktors aus dem Feldende der Pflug länger auf konstanter Tiefe bleibt, wenn der Schlepper aus der Furche herausfährt. Bei einer Ausbildung gemäß Anspruch 3 kann die Regeleinrichtung in besonders einfacher und anpassungsfähiger Weise realisiert werden. Durch die Verwendung eines einzigen Sollwertgebers für verschiedene Regelgrößen gemäß Anspruch 4 läßt sich der Bedienungskomfort der Einrichtung heben und zugleich der notwendige Aufwand senken. Weitere zweckmäßige Ausgestaltungen ergeben sich aus den Ansprüchen 5 bis 7.

Eine äußerst vorteilhafte Weiterbildung der Einrichtung zum Regeln des Hubwerks ergibt sich, wenn gemäß Anspruch 8 im Schlupfregelkreis ein hubsgeschwindigkeitsabhängiges Signal gegengekoppelt wird; dadurch läßt sich ein weniger zum Schwingen neigender Schlupfregelkreis realisieren, für dessen Stabilität ansonsten die Verstärkung im Schlupfregelkreis maßgebend ist. Beim Festlegen der Verstärkung muß aber ein Kompromiß getroffen werden zwischen einerseits Instabilität bei zu großer Verstärkung und andererseits zu großer Proportionalabweichung bzw. Ungenauigkeit des Schlupfregelkreises bei zu kleiner Verstärkung. Durch die stabilisierende Gegenkoppelung kann nun die Verstärkung eher nach den Erfordernissen der Genauigkeit im Schlupfregelkreis festgelegt werden. Die Einrichtung zum Regeln des Hubwerks arbeitet daher gerade bei kritischen Bodenverhältnissen äußerst schwingungsarm, wobei auch die Nachteile einer Stabilisierung durch alleinige Lagezumischung vermieden werden, die nur durch Zumischen eines relativ großen Lageanteils erreichbar ist und daher die Gefahr von zu großen Tiefenän derungen bei hügeligem Gelände und die Gefahr eines Steckenbleibens des Schleppers heraufbeschwört.

Besonders einfach und zweckmäßig lassen sich Gegenkopplungen mit hubgeschwindigkeitsabhängigen Signalen nach den Ansprüchen 9 und 10 erreichen, indem ohnedies vorhandene Signale umgeformt weiterverarbeitet werden.

Eine weitere vorteilhafte Stabilisierung der Anordnung zur Regelung des Hubwerks läßt sich nach Anspruch 11 erreichen, wobei diese Maßnahme sowohl allein oder in Kombination mit dem Gegenstand des Anspruchs 8 durchführbar ist.

### Zeichnung

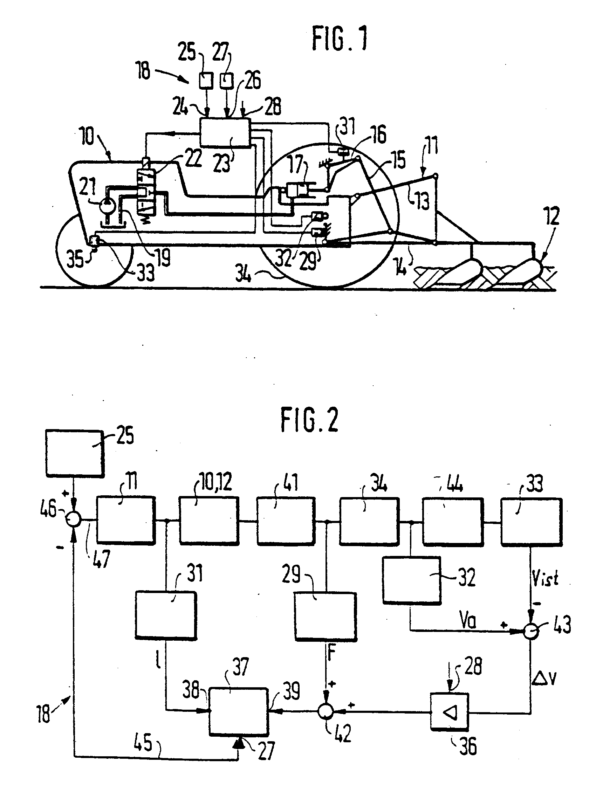

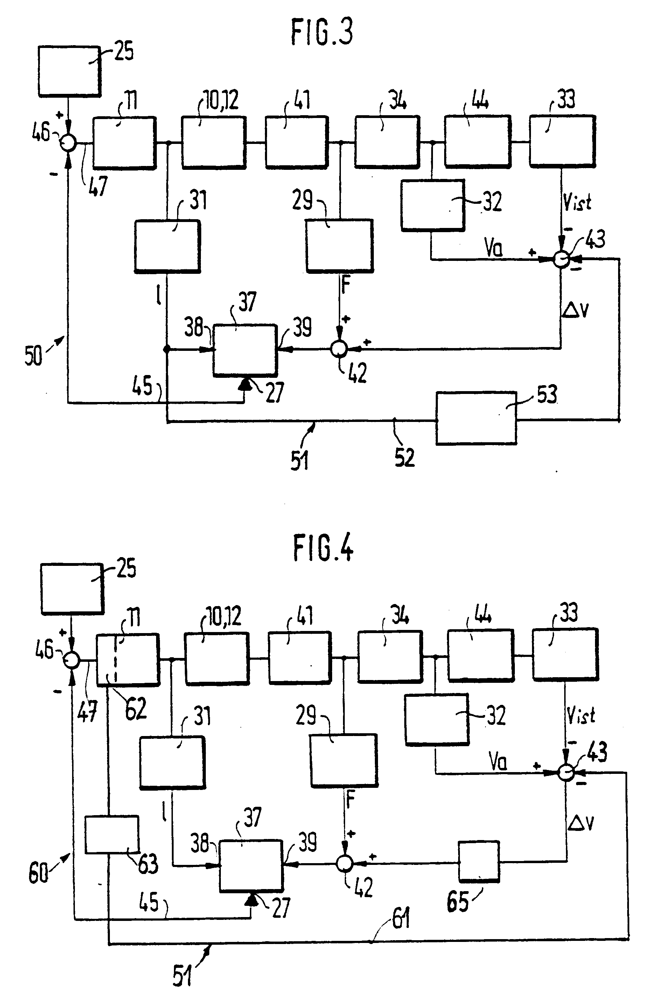

Ausführungsbeispiele der Erfindung sind in der Zeichnung dargestellt und in der nachfolgenden Beschreibung näher erläutert. Es zeigen Figur 1 eine Seitenansicht eines Schleppers mit angelenktem Pflug und mit einer erfindungsgemäßen elektrohydraulischen Einrichtung zum Regeln des Hubwerks in vereinfachter Darstellung und Figur 9 ein Blockschaltbild für den Schlepper mit Regeleinrichtung nach Figur 1. Figur 3 und Figur 4 zeigen Blockschaltbilder einer zweiten und dritten Regeleinrichtung mit stabilisierenden Gegenkoppelungen im Schlupfregelkreis.

### Beschreibung der Ausführungsbeispiele

In der Figur 1 ist als landwirtschaftliches Arbeitsfahrzeug ein Schlepper 10 dargestellt, an dem heckseitig über eine Anbauvorrichtung 11 als Arbeitsgerät ein Pflug 12 angelenkt ist.

Die Anbauvorrichtung 11 ist in an sich bekannter Weise als Dreipunktgestänge mit Oberlenker 13 und Unterlenker 14 aus gebildet. Die Unterlenker 14 sind in üblicher Weise über eine Hubstange 15 und einen abgewinkelten Hubarm 16 von einem hydraulischen Kraftheber 17 betätigbar und bilden somit Teile einer elektrohydraulischen Hubwerks-Regeleinrichtung 18. Der Kraftheber 17 liegt in einem hydraulischen Kreis 19 mit Pumpe 21 und elektrohydraulischem Regelventil 22.

Das Regelventil 22 wird von einem als Regler arbeitenden elektronischen Steuergerät 23 angesteuert, das auch in Mikroprozessortechnik ausgeführt sein kann. Über einen vereinfacht dargestellten, ersten Eingang 24 werden dem Steuergerät 23 die Signale eines Sollwertgebers 25 eingegeben. An einem zweiten Eingang 26 steht das Steuergerät 23 mit einem Mischsteller 27 in Verbindung, mit dessen Hilfe beliebige Anteile von Lageregelung einerseits und andererseits kombinierter Kraft-Schlupf-Regelung ausgewählt werden können. Über einen dritten Stelleingang 28 läßt sich die Verstärkung des schlupfabhängigen Signals variieren und zugleich auch ganz abschalten.

Ferner steht das Steuergerät 23 zur Istwerteingabe mit mehreren Sensoren in Wirkverbindung. Ein Zugkraft-Sensor 29 meldet dem Steuergerät 23 proportional zur Größe der Zugkräfte in den Unterlenkern 14 ausgebildete Signale. Ein Lagesensor 31 liefert von der Lage der Anbauvorrichtung 11 relativ zum Gehäuse des Schleppers 10 abhängige Signale an das Steuergerät 23. Schließlich steht das Steuergerät 23 noch mit einem ersten (32) und einem zweiten Drehzahlsensor 33 in Wirkverbindung. Der erste Drehzahlsensor 32 ist dem Hinterrad 34 zugeordnet und ermittelt somit die Antriebsgeschwindigkeit der angetriebenen Hinterachse. Der zweite Drehzahlsensor 33 ist der nicht angetriebenen Vorderachse 35 zugeordnet und ermittelt somit den Istwert der Geschwindigkeit des Schleppers 10 relativ zum Boden. Das Steuergerät 23 zieht von den in der Regel größeren Signalen des ersten Drehzahlsensors 32 die Signale des zweiten Drehzahlsensors 33 ab und bildet daraus als schlupfabhängiges Signal die Differenzgeschwindigkeit ΔV, die im Steuergerät 23 weiterverarbeitet wird.

Die Wirkungsweise der Regeleinrichtung 18 im Traktor 10 wird wie folgt erläutert, wobei auf das Blockschaltbild nach Figur 2 Bezug genommen wird. Die grundsätzliche Arbeitsweise einer elektrohydraulischen Hubwerks-Regeleinrichtung beim Pflügen mit einem Traktor 10 wird dabei als an sich bekannt vorausgesetzt. Aus Figur 2 geht dabei näher hervor, wie die drei Regelgrößen, Lage 1, Zugkraft F und schlupfabhängiges Signal in Form von Differenzgeschwindigkeit ΔV miteinander verarbeitet werden.

Für das Pflügen mit dem Traktor 10 wird von einer Bedienungsperson am dritten Stelleingang 28 eine bestimmte Verstärkung für das Differenzgeschwindigkeits-Signal Δ V vorgewählt. Wie Versuche gezeigt haben, läßt sich eine besonders günstige Arbeitsweise der Regeleinrichtung erreichen, wenn die Verstärkung in einer Größenordnung um 5 bis 10 % gewählt wird. Dies schließt nicht aus, daß in besonderen Fällen der Verstärkungsfaktor mit 1 gewählt wird und bei Bedarf auch die Rückführung des Schlupfsignals dadurch ganz abgeschaltet wird, daß der Verstärkungsfaktor mit Null gewählt wird.

Ferner wählt die Bedienungsperson mit Hilfe des Mischstellers 27 an einer Mischvorrichtung 37 die Art der Regelung vor. Befindet sich der Mischsteller 27 in seiner einen Endlage, so wird in der Hubwerksregeleinrichtung 18 ausschließlich das Lagesignal 1, welches am ersten Eingang 38 der Mischvorrichtung 37 ansteht, verarbeitet und somit eine reine Lageregelung vorgenommen. Befindet sich der Mischsteller 27 in seiner entgegengesetzten, anderen Endstellung, so wird in der Regeleinrichtung 18 ausschließlich das an zweiten Eingang 39 anstehende Istwertsignal verarbeitet, wobei entsprechend den jeweiligen Verhältnissen eine kombi nierte Zugkraft-Schlupf-Regelung vorgenommen wird. Bei Stellungen des Mischstellers 27 zwischen diesen beiden Endlagen werden die Signale an den beiden Eingängen 38 und 39 in dem jeweils vorgewählten Verhältnis miteinander gemischt. Es sei nun angenommen, daß der Mischsteller 27 in einer Mittelstellung sich befindet und somit die Signale an den beiden Eingängen 38 und 39 jeweils zur Hälfte wirksam werden, also ein Mischungsverhältnis von 1 : 1 gewählt ist.

Wie aus dem Blockschaltbild nach Figur 2 näher hervorgeht, wird die Lage des Hubwerks 11 relativ zum Schlepper 10 von dem Lagesensor 31 ermittelt, der ein entsprechendes Lage-Istwertsignal 1 an die Mischvorrichtung 37 weitergibt. Auf das System aus Schlepper 10 und Pflug 12 wird beim Pflügen ein Bodenwiderstand 41 ausgeübt, aus dem die Zugkraft-Sensoren 29 einen Istwert der Zugkraft F ermitteln und an einen ersten Summenpunkt 42 weitergeben. Vom Antrieb 34 an den Hinterrädern wird mit Hilfe des ersten Drehzahlsensors 32 die Antriebsgeschwindigkeit vₐ abgegriffen und einem zweiten Summenpunkt 43 zugeführt. Infolge der Bodenreibung 44 bewegt sich der Schlepper 10 beim Pflügen mit einer gegenüber der Antriebsgeschwindigkeit kleineren Geschwindigkeit, die mit Hilfe des zweiten Drehzahlsensors 33 am nicht angetriebenen Vorderrad ermittelt wird und als Istwert der Geschwindigkeit vᵢₛₜ im zweiten Summenpunkt 43 von der Antriebsgeschwindigkeit vₐ subtrahiert wird. Die im zweiten Summenpunkt 43 gebildete Differenzgeschwindigkeit ΔV wird über die Verstärker-Einrichtung 36 an den ersten Summenpunkt 42 weitergegeben. Im ersten Summenpunkt 42 wird die Differenzgeschwindigkeit Δ v auf den Istwert der Zugkraft F,aufgeschaltet, also addiert und das somit erreichte Summensignal am zweiten Eingang 39 der Mischvorrichtung 37 eingegeben. Entsprechend dem am Steller 27 vorgewählten Mischungsverhältnis von 1 : 1 bildet die Mischvorrichtung 37 aus den eingegebenen Signalen eine Regelgröße 45, welche in einem dritten Summenpunkt 46 mit dem vom Sollwertgeber 25 vorgegebenen Signal verglichen wird und daraus eine Regelabweichung 47 bildet, welche die Regeleinrichtung 18 in einer die Regelabweichung verringernden Weise beeinflußt.

Die Regeleinrichtung 18 ermöglicht durch diese Verarbeitung des schlupfabhängigen Signals auf der Istwertseite der Zugkraft bei relativ einfacher Bauweise einen hohen Bedienungskomfort. Trotz Verwendung eines einzigen Sollwertgebers 25 wird dadurch bei Lageregelung der Schlupfeinfluß automatisch ausgeblendet und deshalb unwirksam. Wenn andererseits bei ungünstigen Betriebsbedingungen Schwingungen im Regelkreis durch die Auswertung des schlupfabhängigen Signale auftreten, so können diese Schwingungen durch Lagebeimischung reduziert werden, weil bei der Lagezumischung gleichzeitig auch der Schlupfeinfluß abgeschwächt wird. Die Verarbeitung der Differenzgeschwindigkeit hat zudem den Vorteil, daß sie bei kleinen Geschwindigkeiten des Schleppers 10 stärker zur Wirkung kommt. Dies ergibt vor allem dann Vorteile, wenn am Feldanfang der Pflug schneller eingezogen wird und wenn am Feldende beim Ausfahren des Schleppers aus der Furche der Pflug länger seine Tiefe konstant hält.

Die Figur 3 zeigt ein Blockschaltbild einer zweiten Regeleinrichtung 50, die sich von der ersten Regeleinrichtung 18 nach Figur 2 wie folgt unterscheidet, wobei für gleiche Bauelemente gleiche Bezugszeichen verwendet werden:

Die zweite Regeleinrichtung 50 weist zur Stabilisierung eine Gegenkoppelung 51 auf, bei der ein Gegenkoppelungszweig 52 vom Lagesensor 31 zum zweiten Summenpunkt 43 im Schlupfregelkreis führt. Hierbei wird das am Lagesensor 31 abgenommene Lagesignal 1 in einem Differenzierglied 53 nach der Zeit differenziert und am Summenpunkt 43 von der Differenzgeschwindigkeit ΔV abgezogen. Es wird somit die Hub- bzw. Senkgeschwindigkeit der Anbauvorrichtung 11 gegenkoppelnd auf die Differenzgeschwindigkeit ΔV aufgeschaltet.

Die zweite Regeleinrichtung 50 arbeitet im Prinzip ähnlich wie die erste Regeleinrichtung 18, neigt aber infolge der stabilisierenden Gegenkoppelung 51 im Schlupfregelkreis noch weniger zum Schwingen, was besonders bei kritischen Bodenverhältnissen wichtig ist. Eine Stabilisierung durch alleinige Zumischung eines relativ großen Lageanteils mit all seinen Nachteilen kann daher unterbleiben. Es können nun die Erfordernisse der Genauigkeit im Schlupfregelkreis beim Einstellen der Verstärkung besser berücksichtigt werden.

Die Figur 4 zeigt ein Blockschaltbild einer dritten Regeleinrichtung 60, die sich von derjenigen nach Figur 2 und 3 wie folgt unterscheidet, wobei für gleiche Bauelemente gleiche Bezugszeichen verwendet werden:
Die dritte Regeleinrichtung 60 weist wie die zweite Regeleinrichtung 50 eine Gegenkoppelung 51 auf, deren Gegenkoppelungszweig 61 aber von der Anbauvorrichtung 11 ausgeht und dort aus den Signalen des zugehörigen Reglers 62 des Hubwerks ein hubgeschwindigkeitsabhängiges Signal ermittelt. Zu diesem Zweck ist in den Gegenkoppelungszweig 61 ein Signalbildner 63 geschaltet, der aus dem Schaltzustand, der Schaltdauer und/oder der Regelabweichung der Ventilstufe im Regler 62 das hubgeschwindigkeitsabhängige Signal ermittelt. Dabei verarbeitet der Signalbildner 63 bei proportional arbeitenden Ventilen unmittelbar deren Ansteuersignal, das ein Maß für die Hub- bzw. Senkgeschwindigkeit ist. Bei schaltenden Ventilen mit zeitlicher Übergangsfunktion ist auch der zeitliche Verlauf der Hubgeschwindigkeit immer gleich, so daß der Signalbildner 63 die Hubgeschwindigkeit ausgehend vom Einschaltzeitpunkt nachbilden kann. Das Aus gangssignal des Signalbildners 63 wird im zweiten Summenpunkt 43 der Differenzgeschwindigkeit ΔV aufgeschaltet. Mit der dritten Regeleinrichtung 60 läßt sich in entsprechender Weise wie bei der zweiten Regeleinrichtung eine Stabilisierung erreichen.

In Figur 4 ist ferner zwischen die beiden Summenpunkte 42 und 43 eine Differenziereinrichtung 65 geschaltet, mit deren Hilfe durch Differenzierung des schlupfabhängigen Signals ΔV ebenfalls eine Stabilisierung im Schlupfregelkreis erreichbar ist. Die Wirkung der Differenziereinrichtung 65 kann dabei für sich allein im Zusammenhang mit der ersten Regeleinrichtung 18 ausgenutzt werden, oder in Kombination mit einer Gegenkoppelung 51 verwendet werden, wie dies Figur 4 näher zeigt. In beiden Fällen wird durch Ausnutzung eines D-Anteils im Schlupfregelkreis dessen Stabilität unterstützt.

Selbstverständlich sind bei der gezeigten Ausführungsform Änderungen möglich, ohne vom Gedanken der Erfindung abzuweichen. Obwohl die gezeigten Regeleinrichtungen mit der Verarbeitung der Differenzgeschwindigkeit eine besonders vorteilhafte Kombination darstellen, ist es auch möglich, anstelle der Differenzgeschwindigkeit als Regelgröße den Schlupf zu nehmen. Bei allradgetriebenen Fahrzeugen kann anstelle des Drehzahlsensors 33 an der Vorderachse ein Radarsensor oder ein optischer Geschwindigkeitssensor zur Ermittlung der Istgeschwindigkeit verwendet werden. Auch ist es möglich, neben den aufgezeigten drei Regelgrößen noch zusätzliche Parameter in der Regeleinrichtung 18 zu verarbeiten. Fernerhin ist es auch denkbar, daß anstelle der in Figur 1 gezeigten Ausführungsform eine Regeleinrichtung verwendet wird, bei der der Lageregelkreis und der Zugkraftregelkreis als vollhydraulisch arbeitende Einrichtung ausgebildet sind, und das schlupfabhängige Signal über einen geeigneten elektrohydraulischen Wandler in die Regeleinrichtung eingreift.

## Patentansprüche

1. Elektrohydraulische Einrichtung (18; 50; 60) zum Regeln eines Hubwerks (11) an einem landwirtschaftlichen Arbeitsfahrzeug (10), insbesondere eines Pfluges (12) an einem Traktor (10), mit einem Regelkreis zum Beeinflussen der Lage des Hubwerks (11), wozu im Regelkreis wenigstens ein Lagesensor (31), ein Kraftsensor (29) sowie ein Sollwertgeber (25) angeordnet sind, von deren Signalen abhängig über eine insbesondere elektrische Einrichtung und eine hydraulische Ventileinrichtung (22) ein das Hubwerk (11) betätigender hydraulischer Motor (17) gesteuert wird, wobei diesen Signalen an einem Summenpunkt (42) von einem zusätzlichen Sensor (32, 33) vom Schlupf der angetriebenen Räder abhängige Signale (ΔV) zugeführt werden,
dadurch gekennzeichnet, daß am Summenpunkt (42) die schlupfabhängigen Signale (ΔV) dieses zusätzlichen Sensors (32, 33) dem Istwertsignal (F) des Kraftsensors (29) aufgeschaltet werden und dessen Ausgangssignal einem Eingang einer Mischvorrichtung (37) eingegeben wird, die an ihrem anderen Eingang (38) mit dem Istwertsignal (1) des Lagesensors (31) beaufschlagt wird, daß an der Mischvorrichtung (37) das Verhältnis der zu verarbeitenden Eingangssignale mit Hilfe eines Stellers (27). beliebig verstellbar ist, und daß das Ausgangssignal (45) der Mischvorrichtung (37) einem Summenpunkt (46) zugeführt wird, an dem das Signal des einzigen Sollwertgebers (25) anliegt um die Regelabweichung (47) des Regelkreises (18) zu bilden.

2. Einrichtung nach Anspruch 1, dadurch gekennzeichnet, daß als schlupfabhängige Signale die Differenzgeschwindigkeit (ΔV) zwischen der Antriebsgeschwindigkeit (vₐ) eines an getriebenen Rades (34) und der Geschwindigkeit (vᵢₛₜ) des Arbeitsfahrzeugs (10) relativ zum Boden ermittelt werden.

3. Einrichtung nach einem der Ansprüche 1 oder 2, dadurch gekennzeichnet, daß die Vorrichtungen (23, 29, 31, 32, 37) zur Ermittlung und Verarbeitung der drei Regelgrößen (l, F, ΔV) als elektronische Systeme ausgebildet sind.

4. Einrichtung nach einem oder mehreren der Ansprüche 1 bis 3, dadurch gekennzeichnet, daß in den überlagerten Regelkreis für das schlupfabhängige Signal ( ΔV ) vor dem Summenpunkt (42) für die Aufschaltung des Kraft-Istwertes eine Verstärke-Einrichtung (36) geschaltet ist, deren Verstärkungsfaktor insbesondere verstellbar ist.

5. Einrichtung nach Anspruch 4, dadurch gekennzeichnet, daß die Verstärker-Einrichtung (36) zugleich als die Rückführung des schlupfabhängigen Signals unterbrechender Schalter ausgebildet ist.

6. Einrichtung nach einem der Ansprüche 1, 2, 4 und 5, dadurch gekennzeichnet, daß die Regeleinrichtung als voll hydraulisch arbeitende Einrichtung in bezug auf den Lage- und den Zugkraftregelkreis ausgebildet ist und daß das schlupfabhängige Signal über einen elektrohydraulischen Wandler in den hydraulischen Regelkreis eingegeben wird.

7. Einrichtung nach einem oder mehreren der Ansprüche 1 bis 6, dadurch gekennzeichnet, daß eine Gegenkoppelung (51) angeordnet ist, die ein von der Hubgeschwindigkeit der Anbauvorrichtung (11) abhängiges Signal dem überlagerten Regelkreis für das schlupfabhängige Signal (ΔV) aufschaltet.

8. Einrichtung nach Anspruch 7, dadurch gekennzeichnet, daß als hubgeschwindigkeitsabhängiges Signal das Signal (1) des Lagesensors (31) verwendet wird und in dem Gegenkoppelungszweig (52) ein Differenzierglied (53) liegt, dessen Ausgangssignal am zweiten Summenpunkt (43) anliegt.

9. Einrichtung nach Anspruch 7, dadurch gekennzeichnet, daß im Gegenkoppelungszweig (61) ein Signalbildner (63) angeordnet ist, der aus den Größen Schaltzustand und Schaltdauer der Ventilstufe im Regler (62) des Hubwerks und insbesondere der Regelabweichung, das hubgeschwindigkeitsabhängige Signal bildet und dem schlupfabhängigen Regelkreis aufschaltet.

10. Einrichtung nach einem oder mehreren der Ansprüche 1 bis 3, 6 bis 9, dadurch gekennzeichnet, daß in den überlagerten Regelkreis für das schlupfabhängige Signal (ΔV), vor dem Summenpunkt (42) für die Aufschaltung des Kraft-Istwertes, eine Differenziereinrichtung (65) geschaltet ist.

## Claims

1. Electrohydraulic device (18; 50; 60) for controlling a lifting mechanism (11) on an agricultural work vehicle (10), in particular a plough (12) on a tractor (10), with a control loop for influencing the position of the lifting mechanism (11), for which purpose there are arranged in the control loop at least one position sensor (31), a force sensor (29) and a setpoint generator (25), dependent on the signals of which a hydraulic motor (17), operating the lifting mechanism (11), is controlled via a device, in particular an electrical device, and a hydraulic valve device (22), these signals being fed at a summation point (42) signals (ΔV) dependent on the slip of the driven wheels from an additional sensor (32, 33), characterized in that, at the summation point (42), the slip-dependent signals (ΔV) of this additional sensor (32, 33) are applied to the actual-value signal (F) of the force sensor (29), and the output signal of the latter is entered in an input (39) of a mixing apparatus (37), which has applied to its other input (38) the actual-value signal (1) of the position sensor (31), in that, at the mixing apparatus, the ratio of the input signals to be processed is adjustable at will with the aid of an adjuster (27) and in that the output signal (45) of the mixing apparatus (37) is fed to a summation point (46), at which the signal of the single setpoint generator (25) is present in order to form the system deviation (47) of the control loop (18).

2. Device according to Claim 1, characterized in that the differential speed (ΔV) between the drive speed (vₐ) of a driven wheel (34) and the speed (v_{actual}) of the work vehicle (10) in relation to the ground is determined as a slip-dependent signal.

3. Device according to one of Claims 1 or 2, characterized in that the apparatuses (23, 29, 31, 32, 37) for determining and processing the three controlled variables (l, F, ΔV) are designed as electronic systems.

4. Device according to one or more of Claims 1 to 3, characterized in that an amplifier device (36), the gain factor of which in particular is adjustable, is connected into the superimposed control loop for the slip-dependent signal (ΔV) upstream of the summation point (42) for the applying of the force actual value.

5. Device according to Claim 4, characterized in that the amplifier device (36) is at the same time designed as a switch interrupting the feedback of the slip-dependent signal.

6. Device according to one of Claims 1, 2, 4 and 5, characterized in that the control device is designed as a fully hydraulically operating device with respect to the position control loop and the tractive-force control loop and in that the slip-dependent signal is entered in the hydraulic control loop via an electrohydraulic converter.

7. Device according to one or more of Claims 1 to 6, characterized in that a degenerative feedback (51) is arranged, which applies a signal dependent on the lifting speed of the attachment apparatus (11) to the superimposed control loop for the slip-dependent signal (ΔV).

8. Device according to Claim 7, characterized in that the signal (l) of the position sensor (31) is used as the lifting speed-dependent signal and a differentiating element (53), the output signal of which is present at the second summation point (43), lies in the degenerative feedback branch (52).

9. Device according to Claim 7, characterized in that a signal former (63) is arranged in the degenerative feedback branch (61), which signal former forms the lifting speed-dependent signal from the variables of switching state and switching duration of the valve stage in the controller (62) of the lifting mechanism, and in particular the system deviation, and applies it to the slip-dependent control loop.

10. Device according to one or more of Claims 1 to 3, 6 to 9, characterized in that a differentiating device (65) is connected into the superimposed control loop for the slip-dependent signal (ΔV), upstream of the summation point (42) for the applying of the force actual value.

## Revendications

1. Dispositif électrohydraulique (18 ; 50 ; 60) pour commander un attelage relevable (11) d'un engin agricole (10) notamment d'une charrue (12) portée par un tracteur (10), comportant un circuit de réglage pour influencer la position de l'attelage relevable (11), le circuit de réglage comportant au moins un capteur de position (31), un capteur de force (29) ainsi qu'un capteur de valeurs de consigne (25) dont les signaux commandent en fonction d'une installation notamment électrique et d'un dispositif à vanne hydraulique (22), un moteur hydraulique (17) actionnant l'attelage relevable (11), et ces signaux étant combinés en un point d'addition (42) à des signaux (ΔV) dépendant du glissement des roues entraînées, et fournis par un capteur supplémentaire (32, 33), dispositif caractérisé en ce qu'au point d'addition (42), on applique les signaux dépendant de la vitesse (ΔV) au signal de valeur réelle (F) du capteur de force (29) et son signal de sortie est appliqué à une entrée d'un dispositif de combinaison (37) dont l'autre entrée (38) reçoit le signal de valeur réelle (1) du capteur de position (31), et en ce que sur le dispositif de combinaison (37), on règle de manière quelconque le rapport entre les signaux d'entrée à traiter en particulier, à l'aide d'un organe de réglage (27) et en ce que le signal de sortie (45) du dispositif mélangeur (37) est appliqué à un point additionneur (46) recevant le signal de l'unique capteur de valeurs de consigne (25) pour former la déviation de réglage (47) du circuit de réglage (18).

2. Dispositif selon la revendication 1, caractérisé en ce que les signaux dépendant du glissement sont la différence de vitesse (ΔV) entre la vitesse d'entraînement (Vₐ) d'une roue motrice (34) et la vitesse (vᵣₑₑₗ) du véhicule (10) par rapport au sol.

3. Dispositif selon l'une des revendications 1 ou 2, caractérisé en ce que les dispositifs (23, 29, 31, 32, 37) sont des systèmes électroniques pour déterminer et traiter les trois grandeurs de réglage (1, F, ΔV).

4. Dispositif selon l'une ou plusieurs des revendications 1 à 3, caractérisé en ce qu'un amplificateur (36) est branché dans le circuit de réglage combiné du signal dépendant du glissement (ΔV), en amont du point d'addition (42) pour appliquer la valeur réelle de la force, et le coefficient d'amplification de cet amplificateur est notamment réglable.

5. Dispositif selon la revendication 4, caractérisé en ce que l'amplificateur (36) est en même temps conçu comme commutateur permettant de couper la réinjection du signal dépendant du glissement.

6. Dispositif selon l'une des revendications 1, 2, 4 et 5, caractérisé en ce que le dispositif de réglage est un dispositif à fonctionnement purement hydraulique pour le circuit de position et le circuit de la force de traction et en ce que le signal dépendant du glissement est introduit dans le circuit de réglage hydraulique par un convertisseur électrohydraulique.

7. Dispositif selon l'une ou plusieurs des revendications 1 à 6, caractérisé par une contre réaction (51) qui combine un signal dépendant de la vitesse d'élévation de l'attelage (11) au circuit de réglage pour le signal (ΔV) dépendant du glissement.

8. Dispositif selon la revendication 7, caractérisé en ce que le signal (1) du capteur de position (31) est utilisé comme signal dépendant de la vitesse de levage et la branche de contre-réaction (52) comporte un élément différentiateur (53) dont le signal de sortie est appliqué au second point d'addition (43).

9. Dispositif selon la revendication 7, caractérisé en ce que la branche de contre-réaction (61) comporte un générateur de signaux (63) qui forme le signal dépendant de la vitesse, signal appliqué au circuit de réglage dépendant du glissement à partir des grandeurs correspondant à l'état de commutation et à la durée de commutation de l'étage à vanne du dispositif de réglage (62) de l'attelage relevable et en particulier de la déviation de réglage.

10. Dispositif selon l'une ou plusieurs des revendications 1 à 6, 6 à 9, caractérisé par un élément de différentiation (65) branché dans le circuit de réglage combiné du signal dépendant du glissement (ΔV) en amont du point d'addition (42) pour appliquer la valeur réelle de la force.
